# EUROPÄISCHE PATENTSCHRIFT

(11) **EP 0 542 032 B1**
(45) Veröffentlichungstag und Bekanntmachung des Hinweises auf die Patenterteilung: **11.09.1996**
(21) Anmeldenummer: 92118358.8
(22) Anmeldetag: 28.10.1992
(51) Int. Cl.: E03F 3/04, E03F 5/02, F16L 45/00

(54) **Deckel zum Verschliessen einer Inspektions- und Reinigungsöffnung in einem Abwasserkanalrohr**
Cover for closing an inspection and cleansing opening in a sewage pipe
Couvercle de fermeture d'un orifice d'inspection et de nettoyage d'une conduite d'eaux usées

(30) Priorität: 14.11.1991 DE 4137397
(43) Veröffentlichungstag der Anmeldung: 19.05.1993
(73) Patentinhaber: THYSSEN INDUSTRIE AG, D-45128 Essen (DE)
(72) Erfinder: Rammelsberg, Jürgen, Dr., W-4690 Herne 2 (DE)
(74) Vertreter: Dahlkamp, Heinrich-Leo, Dipl.-Ing.

(56) Entgegenhaltungen:
- WO-A-88/03244
- WO-A-89/05418
- DE-C- 909 785
- DE-U- 8 914 601
- FR-A- 1 562 232
- FR-A- 2 595 438

## Beschreibung

Die Erfindung betrifft einen Deckel zum Verschließen einer Inspektions- und Reinigungsöffnung in einem Abwasserkanalrohr, vorzugsweise aus duktilem Gußeisen, der eine umlaufende Aussparung mit einer integrierten Dichtung besitzt, die beim Verschließen des Deckels mit Hilfe von das Abwasserkanalrohr umfassenden Spannelementen auf der Rohroberfläche verpreßt wird und ein Verfahren zur Montage eines derartigen Deckels.

Im Zuge des zunehmenden Qualitätsbewußtseins beim Abwassertransport gewinnt die Überwachung von in Betrieb befindlichen Kanälen eine immer größere Bedeutung. So schreiben verschiedene Verordnungen eine turnusmäßige Reinigung und Inspektion der Kanäle vor, insbesondere dann, wenn sich diese Kanäle in Trinkwasserschutzgebieten befinden. Es werden spezielle Reinigungs- und Inspektionsöffnungen an den Kanälen benötigt, die während des Kanalbetriebes dauerhaft dicht sein und für die Inspektion oder die Reinigung leicht zu öffnen sein müssen.

Die Öffnung soll möglichst groß und lang sein, weil die selbstfahrenden Inspektions-Ferseh-Kameras im Laufe der Zeit immer größer und schwerer geworden sind, damit sie ein möglichst langes Steuer- und Empfangskabel hinter sich herschleppen können.

Ebenso nehmen die Düsen und Schläuche für den Hochdruckreinigungsvorgang immer größere Ausmaße an, um die Effektivität der Reinigung zu verbessern.

Für Kanäle aus duktilen Gußrohren existieren derzeit mehrere Öffnungsmöglichkeiten, die den Stand der Technik kennzeichnen:
- Rohrreinigungskästen als komplettes Formstück mit zwei Anschlußmuffen und einer rechteckigen Öffnung, die über einen rechteckigen Flaschdeckel verschlossen wird. Der Nachteil dieser Konstruktion besteht in ihrem hohen Gewicht und in ihrem hohen Preis.
- Direkt auf dem Rohr zu montierende Rohrreinigungsstücke mit ovaler Öffnung; die Konstruktion besteht aus mehreren Teilen mit dem Nachteil, daß sich die Montage unter Baustellenbedingungen schwierig gestaltet.
- Aufgeschweißte Rohrreinigungskästen aus Stahlblech mit rechteckigem Flanschdeckel. Diese Konstruktion kann entweder im Rohrherstellerwerk oder an der Baustelle appliziert werden, wobei an Kanalbaustellen generell ungern geschweißt wird. Zusätzlich stellt sich das Problem eines ausreichenden Korrosionsschutzes, womit die gesamte Konstruktion ebenfalls einen recht hohen Preis hat.

Aus der FR-A-1.562.232 ist ein gattungsgemäßer Deckel zum Verschließen einer Insprektions- und Reinigungsöffnung in einem Abwasserkanalrohr bekannt, wobei der Deckel eine metallische Außenwand und eine damit verbundene innere Verkleidung besitzt. In dem Außendeckel ist eine umlaufende Aussparung mit einer integrierten Dichtung vorgesehen, die beim Verschließen des Deckels mit Hilfe von das Rohr umfassenden Spannelementen auf die Rohroberfläche verpreßt werden kann.

Der Erfindung liegt die Aufgabe zugrunde, einen Deckel zum Verschließen einer Inspektions- und Reinigungsöffnung in einem Abwasserkanalrohr nach der durch die FR-A-1.562.232 bekannten Art zu vereinfachen.

Zur Lösung dieser Aufgabe wird erfindungsgemäß vorgeschlagen, daß der Deckel einstückig und entsprechend der Kontur des Rohres gewölbt ausgebildet ist und mit einer dem Öffnungsrand des Rohrabschnittes angepaßten Stufe in die Rohrwand eingelegt ist, wobei die Wölbung an der Stufe so nach innen in Richtung Rohrachse verspringt, daß das Lichtraumprofil des Rohres im wesentlichen erhalten bleibt.

In den Unteransprüchen 2 bis 4 sind sinnvolle Ausführungsformen des Deckels beschrieben. Der Anspruch 5 enthält darüber hinaus ein Verfahren zur Montage eines vorbeschriebenen Deckels.

Die beschriebene Verschlußeinrichtung mit der erfindungsgemäßen Konstruktion des Deckels kann sowohl für Abwasserdruckleitungen als auch für Freigefälleleitungen eingesetzt werden. Die in die Rohröffnung eingezogene Partie des Deckels schließt das Lichtraumprofil des Rohres beinahe lückenlos wieder ab. Dies hat den Vorteil, daß keine zusätzlichen Räume unterhalb des Deckels entstehen, in denen sich Faulgase fangen können und so zu der gefürchteten biogenen Schwefelsäurekorrosion beitragen. Bei Abwasserdruckleitungen können durch den eingezogenen Deckel im Bereich der Öffnung keine Turbulenzen entstehen.

Der beschriebene Verschlußdeckel aus duktilem Gußeisen kann im übrigen bei allen im Kanalbau üblichen Rohrwerkstoffen eingesetzt und an der Baustelle mit baustellenüblichem Werkzeug an jeder beliebigen Stelle des Rohres mit einfachen Mitteln appliziert werden. Das gilt insbesondere bei einer Rohröffnungslänge von mindestens 0,5 m. Der Deckel ist dabei sowohl gegen den Wasserinnendruck als auch gegenüber Vakuum dicht verschließbar und kann bei Bedarf leicht geöffnet und danach dicht wieder verschlossen werden.

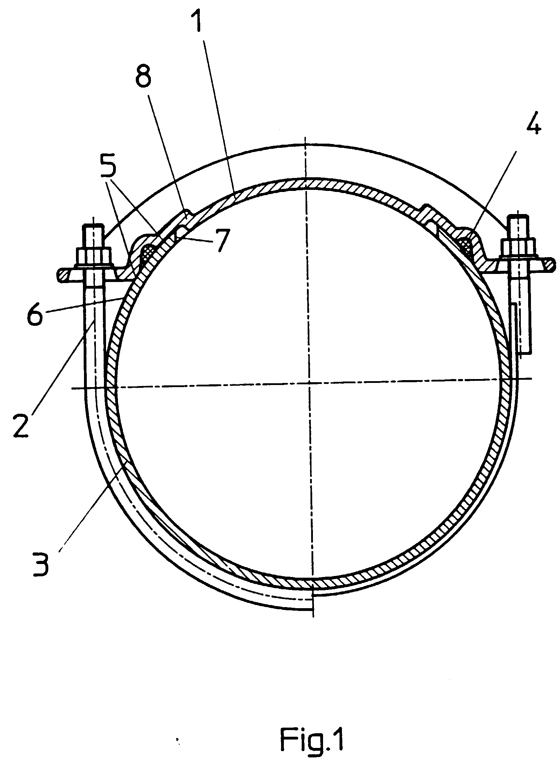

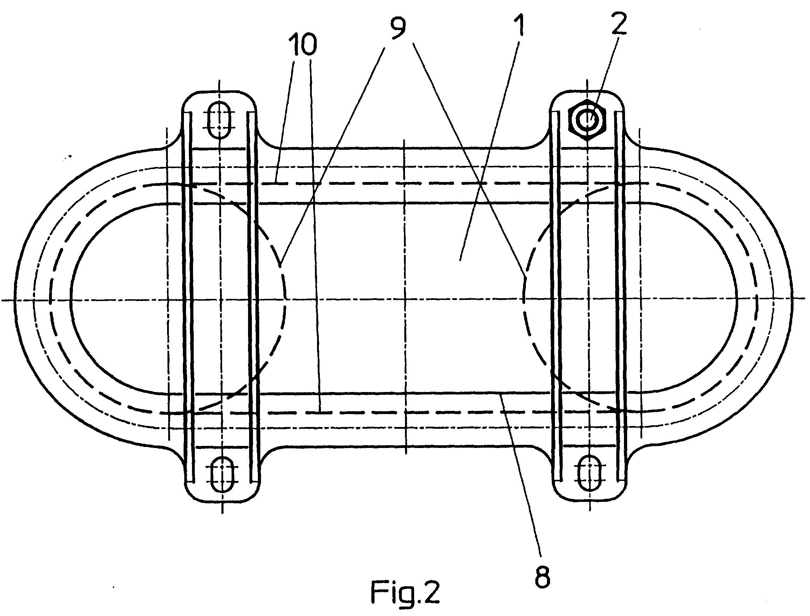

Die Erfindung wird anhand der beigefügten Figuren 1 und 2 beispielsweise näher erläutert.
- Fig. 1: zeigt einen Querschnitt durch ein Abwasserrohr 3 mit dem daran befestigten Deckel 1.
- Fig. 2: zeigt in der Draufsicht einen Deckel 1.

Der in den Figuren 1 und 2 dargestellte Deckel (1) aus duktilem Gußeisen ist mit Hilfe von Spannelementen (2) am Abwasserrrohr (3) so befestigt, daß die im Deckel (1) integrierte Dichtung (4) auf der Rohroberfläche (6) verpreßt wird und dadurch abdichtet. Die Dichtung (4) liegt zwischen zwei umlaufende Anschlagrippen (5), welche die Kompression des Elastomers als Anschlag auf der Rohroberfläche (6) begrenzen. So können die bei Alterung auftretenden Elastizitätsverluste nicht zu langzeitlichen Undichtigkeiten führen.

Der Ausschnitt (7) im Rohr wird durch (2) in Längsachse des Rohres angebrachte Bohrungen (9) von ca. 200 mm Durchmesser mit einem Kernbohrgerät hergestellt, welches an Kanalbaustellen üblicherweise zur Montage von Hausanschlußstücken verwendet wird. Der zwischen diesen Löchern stehengebliebene Rest wird mit einer Trennscheibe herausgeschnitten (10); derartige Trennscheiben werden zum Kürzen der Rohre an der Baustelle benötigt.

Nach der Herstellung des Rohrausschnittes werden die Schnittränder mit einem geeigneten Korrosionsschutz versehen; danach wird der Deckel (1) auf das Rohr (3) aufgesetzt und mit Hilfe der Spannelemente (2) verspannt.

Durch die wie eine Verrippung wirkende umlaufende Stufe (8) ist der Deckel so verwindungssteif, daß er den Beanspruchungen aus Wasserinnendruck standhält, ohne undicht zu werden.

## Patentansprüche

1. Deckel zum Verschließen einer Inspektions- und Reinigungsöffnung in einem Abwasserkanalrohr, vorzugsweise aus duktilem Gußeisen, der eine umlaufende Aussparung mit einer integrierten Dichtung (4) besitzt, die beim Verschließen des Deckels (1) mit Hilfe von das Abwasserkanalrohr umfassenden Spannelementen (2) auf der Rohroberfläche (6) verpreßt wird, **dadurch gekennzeichnet**, daß der Deckel (1) einstückig und entsprechend der Kontur des Rohres (3) gewölbt ausgebildet ist und mit einer dem Öffnungsrand des Rohrausschnittes (7) angepaßten Stufe (8) in die Rohrwand einlegbar ist, wobei die Wölbung an der Stufe (8) so nach innen in Richtung Rohrachse verspringt, daß das Lichtraumprofil des Rohres (3) im wesentlichen erhalten bleibt.

2. Deckel nach Anspruch 1, **dadurch gekennzeichnet**, daß die Dichtung (4) zwischen zwei umlaufenden Anschlagrippen (5) angeordnet ist, die die Kompression der Dichtung als Anschlag auf der Rohroberfläche (6) begrenzen.

3. Deckel nach Anspruch 1, **dadurch gekennzeichnet**, daß der Deckel (1) sich in Rohrlängsrichtung erstreckt, im mittleren Bereich rechteckig und an den Enden halbkreisförmig ausgebildet ist.

4. Deckel nach Anspruch 1, **dadurch gekennzeichnet**, daß der Deckel (1) im Bereich der Spannelemente (2) in Querrichtung des Abwasserrohres (3) angeordnete äußere Verstärkungsrippen (11) besitzt.

5. Verfahren zur Montage eines Deckels nach einem der vorhergehenden Ansprüche, **dadurch gekennzeichnet**, daß in Längsachse des Abwasserrohres (3) im Abstand zueinander mindestens zwei Bohrungen (9), vorzugsweise mit einem Kembohrgerät, hergestellt werden und der zwischen den Bohrungen stehengebliebene Rest durch einen Trennschnitt (10), vorzugsweise mit einer Trennscheibe, herausgeschnitten wird und anschließend der Deckel (1) auf das Abwasserrohr (3) aufgesetzt und mit Hilfe von Spannelementen (2) verspannt wird.

## Claims

1. Cover for closing an inspection and cleansing opening in a sewage pipe, preferably made of ductile cast iron, said cover having a circumferential recess with a sealing (4) integrated therein which is pressed on the pipe surface (6) by the aid of tightening elements (2) encompassing the sewage pipe when closing said cover (1), **characterized in that** said cover is of a one-piece structure, arched to match the contour of the pipe (3) and being insertible into the pipe shell with a step (8) adapted to the opening rim of the pipe recess (7), with the arch at the step (8) springing to the inside in the direction of the pipe axis so that the clearance gauge of said pipe (3) is mainly maintained.

2. Cover pursuant to Claim 1, **characterized in that** the sealing (4) is located between two circumferential stopper ribs (5) which confine the compression of the sealing as a stopper on the pipe surface (6).

3. Cover pursuant to Claim 1, **characterized in that** the cover (1) extends in the longitudinal direction of the pipe, being of a rectangular shape in the middle area and of a semicircle shape at the ends.

4. Cover pursuant to Claim 1, **characterized in that** the cover (1) possesses external reinforcing ribs (11) located in the area of the tightening elements (2) in transverse direction of the sewage pipe (3).

5. Procedure for the installation of the cover according to any one of the preceding claims, **characterized in that** at least two bores (9) are drilled at a distance to each other in the longitudinal axis of the sewage pipe (3), preferably by use of a core drilling equipment, and that the remainder of it between the bores is cut-out by a separating cut (10), preferably by use of a cutting-off wheel, and that the cover (1) is subsequently mounted again onto the sewage pipe and tightened by the aid of the tightening elements (2).

## Revendications

1. Couvercle de fermeture d'un orifice d'inspection et de nettoyage d'une conduite d'eaux usées, de préférence en fonte ductile, muni d'un évidement périphérique avec un joint (4) intégré qui est comprimé sur la surface de la conduite (6) lors de la fermeture du couvercle (1) à l'aide des éléments de serrage (2) entourant la conduite d'eaux usées, **caractérisé en ce que** le couvercle (1) est formé en une pièce et bombé conformément au contour de la conduite (3) et qu'il peut être inséré dans la paroi de la conduite avec un décrochement (8) adapté au bord de l'ouverture de l'encoche de la conduite (7), la bombure au niveau du décrochement (8) se déportant vers l'intérieur en direction de l'axe de la conduite de telle manière que le gabarit de la conduite (3) est essentiellement maintenu.

2. Couvercle selon la revendication 1 **caractérisé en ce que** le joint d'étanchéité (4) est ordonné entre deux nervures de butée (5) qui limitent la compression du joint en faisant butée sur la surface de la conduite (6).

3. Couvercle selon la revendication 1 **caractérisé en ce que** le couvercle (1) s'étend dans le sens longitudinal de la conduite, qu'il a une forme rectangulaire au milieu et est demi-circulaire aux extrémités.

4. Couvercle selon la revendication 1 **caractérisé en ce que** le couvercle (1) est pourvu de nervures de renforcement (11) extérieures ordonnées au niveau des éléments de serrage (2) dans le sens transversal de la conduite des eaux usées (3).

5. Procédé pour le montage d'un couvercle selon l'une des revendications précédentes **caractérisé en ce qu'**aux moins deux alésages (9) sont réalisés dans l'axe longitudinal de la conduite des eaux usées (3) avec un écart l'un de l'autre et que la partie restante entre les alésages est découpée par une coupe (10) effectuée de préférence avec une meule à tronçonner et que le couvercle (1) est placé ensuite sur la conduite d'eaux usées (3) et tendu au moyen d'éléments de serrage (2).
